# EUROPÄISCHE PATENTSCHRIFT

(11) **EP 0 670 914 B1**
(45) Veröffentlichungstag und Bekanntmachung des Hinweises auf die Patenterteilung: **09.10.1996**
(21) Anmeldenummer: 94900731.4
(22) Anmeldetag: 24.11.1993
(51) Int. Cl.: C23C 22/66, C25D 5/30, C25D 5/44

(54) **GLEITELEMENT UND VERFAHREN ZU SEINER HERSTELLUNG**
SLIDING ELEMENT AND PROCESS FOR PRODUCING THE SAME
ELEMENT DE GLISSEMENT ET SON PROCEDE DE FABRICATION

(30) Priorität: 27.11.1992 DE 4239851; 24.11.1993 DE 4340073
(43) Veröffentlichungstag der Anmeldung: 13.09.1995
(73) Patentinhaber: GLYCO-METALL-WERKE Glyco B.V. & Co. KG, 65201 Wiesbaden (DE)
(72) Erfinder: HUHN, Hans-Ulrich, D-65388 Schlangenbad (DE); MÜLLER, Klaus, D-65207 Wiesbaden (DE)
(86) Internationale Anmeldenummer: DE9301131
(87) Internationale Veröffentlichungsnummer: WO9412688

(56) Entgegenhaltungen:
- EP-A- 0 500 015
- DE-B- 2 522 926
- US-A- 4 100 038
- US-A- 4 225 397

## Beschreibung

Die Erfindung betrifft ein Gleitelement nach dem Oberbegriff von Anspruch 1 sowie ein Verfahren nach dem Oberbegriff von Anspruch 9.

Verbundgleitlager weisen eine Stahlstützschale mit einer Gleitmetallschicht auf, die meist aus einer Aluminium-Zinn-Legierung besteht. In den meisten Fällen ist es erforderlich, die Lauffläche der Lager zusätzlich mit einer meist galvanisch aufgebrachten Schicht aus einer Legierung zu versehen, die eine wesentlich geringere Härte als das Aluminium-Zinn aufweist. Das Aluminium-Zinn-Gleitmetall ist nämlich nur in sehr begrenztem Maße in der Lage, sich in der Einlaufphase an die Stahlwelle anzupassen. Der Anpassungsvorgang besteht im wesentlichen in einer plastischen Verformung und auch einem teilweisen Abrieb der Gleitschicht. Aluminium-Zinn-Legierungen passen sich kaum plastisch an die Welle an und werden in den durch geometrische Unvollkommenheit von Lagerschale und Welle im Mischreibungszustand befindlichen Bereichen der Gleitfläche auch nicht unter gleichzeitiger Glättung der Lauffläche abgerieben, sondern es kommt in den harttragenden Bereichen zu einer Aufrauhung, unter ungünstigen Bedingungen sogar zu einer Riefenbildung. Durch diese Veränderungen der Lauffläche wird die Ausbildung eines Schmiermittelfilms von gleichmäßiger Dicke beeinträchtigt und örtliche Mischreibungen, die nur auf die Einlaufphase beschränkt sein sollten, bleiben bestehen, so daß nach relativ kurzen Laufzeiten bereits erhebliche Lagerschäden auftreten können.

Um das Anpassungsverhalten des Lagers durch Auftragen einer weichen Schicht zu verbessern, mußte das Problem der elektrochemischen Abscheidung auf Aluminium-Legierungen gelöst werden.

Aus der DE-AS 10 48 757 ist es bekannt, zwischen der Aluminium-Legierung und der Gleitschicht eine Silberschicht vorzusehen, um eine bessere Haftung zwischen dem Aluminium und der Lauffläche zu erzielen. Jedoch hat die aus der DE-AS 10 48 757 bekannte Bindungsschicht aus Silber den Mangel, das sie eine minimale Dicke von 2,5 µm aufweisen muß, um ausreichende Bindung zu der darunter angeordneten dünnen Zinkschicht und der Trägerschicht aus Aluminiumwerkstoff zu behalten. Außerdem ist die galvanische Aufbringung der bekannten Bindungsschicht aus Silber mit kritischen Arbeitsbedingungen verbunden, so daß sich die aus der DE-AS 10 48 757 bekannte Bindungsschicht aus Silber in der Praxis nicht durchsetzen konnte.

Beispielsweise aus der DE-OS 15 33 214 ist es bekannt, eine Nickelzwischenschicht zwischen einer aus Kupfer bestehenden Außenschicht und einer aus Blei und Zinn bestehenden Innenschicht vorzusehen. Nickel als Haftgrundlage hat sich bei den bekannten Lagern seit langem bewährt, wenn mit oberflächengehärteten Wellenzapfen gearbeitet wird, wie dies bei kleineren Motoren der Fall ist. In solchen Fällen ist es relativ ungefährlich, wenn nach längeren Laufzeiten die weiche Außenschicht örtlich bis auf die Nickelschicht verschleißt und die Welle mit dem Nickel in Berührung kommt. Anders hingegen liegen die Verhältnisse bei großen Dieselmotoren mit weichen Zapfen.

Das im bekannten Lager galvanisch abgeschiedene Nickel besitzt eine Härte, die höher liegt als die Oberflächenhärte nicht oberflächengehärteter Wellen. Erreicht der Wellenzapfen nach Verschleiß der galvanischen Schicht den Nickelhaftgrund, so gleiten zwei nahezu gleich harte Werkstoffe, die sich zudem metallurgisch sehr ähnlich sind, aufeinander. Diese ungünstige Gleitpaarung führt zu einem Verschleiß des Wellenzapfens, der sich zunächst als Aufrauhung im fortgeschrittenen Stadium schließlich als Riefenbildung bemerkbar macht.

Neben ihrer unerwünschten hohen Härte zeigt die Nickelschicht noch in anderer Hinsicht ein sehr nachteiliges Verhalten. Bei den im Lager herrschenden Betriebstemperaturen können sich im Laufe von einigen 1000 Betriebsstunden zwischen Nickel und Zinn intermetallische Phasen mit der im Vergleich zur reinen Nickelschicht noch wesentlich höheren Härte bilden. Erfolgt der Verschleiß der Laufschicht langsam, so kommt die Welle mit der inzwischen auf einige µm angewachsenen intermetallischen Schicht in Berührung, die dann eine starke Abrasion der Welle bewirkt.

Das Aufbringen einer reinen Zinnschicht ohne Nickelzwischenschicht auf eine Alumium-Lagerlegierung ist deswegen nicht möglich, weil keine ausreichende Bindung zur Aluminium-Legierung erreicht werden kann. Nach relativ kurzer Betriebsdauer erfolgt bereits eine Ablösung der Zinnschicht. Es wurde daher versucht, mittels eines chemischen Prozesses die Zinnschicht unmittelbar auf die Aluminium-Lagerlegierung aufzubringen. Mittels eines alkalischen und eines sauren Reinigers wird die Aluminium-Lagerlegierung vorbehandelt. Danach wird über einen Aktivator die Oberfläche für die anschließend aufzubringende Zinnschicht vorbehandelt, die durch Eintauchen in eine Zinn-Immersionslösung aufgetragen wird. Diese ohne Zwischenschicht, chemisch aufgebrachte Zinnschicht führt jedoch relativ schnell zu Ausfällen. Auf einem Pleuellagerprüfstand konnte festgestellt werden, daß bereits bei Öleintrittstemperaturen von 100°C vor Erreichen der Versuchsdrehzahl von 6700/min die derart mit einer Zinnschicht versehenen Lager ausfallen.

Ein ähnliches Verfahren ist aus der EP 0 234 738 Al bekannt, bei dem vor dem galvanischen Aufbringen einer Zinnschicht eine Behandlung mit einem Immersionsbad vorgenommen wird. Hierbei handelt es sich um ein saures Immersionsbad, das freie Metallionen, wie Nickel- oder Kupferionen, oder komplex gebundene Metalle enthält, wobei immer Halogenionen zwingend vorhanden sind. Saure Immersionslösungen, deren Bestandteile Nickel und Halogene aufweisen, neigen jedoch zur Oberflächenkorrosion von Aluminium. Abgeschiedene Zinnschichten sind daher instabil und Haftungstests (Klebstreifentest) haben gezeigt, daß sich die Zinnschicht teilweise bis zu 30% von der Aluminium- oder der Aluminiumlegierungsschicht ablöst. Unterzieht man beschichtete Teile einem Blister-Test bei 4 h Haltezeit und einer Temperatur von 160°C, so treten Bläschen auf,

was auf Gaseinschlüsse hinweist, die zu einer Ablösung der Zinnschicht beitragen.

Auch aus Chemical Abstracts Bd. 98 (1983), S. 547, Nr. 224260W ist eine Ni-Immersionsbeschichtung bekannt, wobei ebenfalls mit sauren Lösungen gearbeitet wird. Darüber hinaus führt diese Behandlung nicht zu einer dünnen Immersionsabscheidung, sondern zu einer regelrechten Ni-Schicht, die mit einer Ni-Zwischenschicht gemäß DE-OS 15 33 214 vergleichbar ist.

Es ist daher Aufgabe der Erfindung, ein Gleitelement bereitzustellen, das eine besser haftende funktionelle Zinnschicht ohne andere metallische Zwischenschicht auf der Lagermetallschicht aufweist. Es ist auch Aufgabe der Erfindung, ein Verfahren zur Herstellung solcher Gleitelemente anzugeben.

Die Aufgabe wird mit einem Gleitelement gemäß Anspruch 1 gelöst. Gegenstand des Verfahrens ist der Patentanspruch 9.

Es wurde überraschend festgestellt, daß eine galvanisch aufgebrachte Zinnschicht dann weitaus besser haftet, wenn die Zinnschicht über eine Zink, Kupfer, Nickel und Eisen aufweisende, alkalische Immersionsabscheidung gebunden ist. Eine alkalische Immersionsabscheidung bewirkt eine schonende Oberflächenbehandlung, die zu einer weitaus besseren Haftung der Zinnschicht führt. Die Durchführung eines Blistertest mit 4h Haltezeit und 160°C zeigte keinerlei Bläschenbildung. Eine Ablösung der Zinnschicht konnte nicht festgestellt werden.

Die Immersionsabscheidung auf alkalischer Basis bewirkt eine Oberflächenreaktion mit dem Aluminium, wodurch die Oberfläche derart verändert wird, daß die Zinnschicht regelrecht auf der Lagermetallschicht verankert werden kann. Hierzu trägt vermutlich auch bei, daß komplex gebundene Anionen in der Immersionslösung vorliegen und auch die Metalle komplex gebunden sind, wobei die Salze halogenfrei sind.

Im Gegensatz zu den relativ dicken Zwischenschichten, besitzt die Immersionsabscheidung eine Dicke, die unter 1 µm, vorzugsweise unter 0,3 µm liegt.

Die funktionelle Zinnschicht ist vorzugsweise als Korrosionsschutzschicht mit einer Dicke zwischen 1 µm und 5 µm ausgebildet. Die Zinnschicht kann auch eine größere Dicke aufweisen und als Einlaufschicht mit einer Dicke zwischen 5 µm bis 50 µm ausgebildet sein.

Es wurde festgestellt, daß das Gleitelement dann überragende Eigenschaften aufweist, wenn hinsichtlich der in der Aluminium-Legierung enthaltenen Anteile bestimmte Grenzwerte eingehalten werden. Wenn die Lagermetallschicht aus einer zinnhaltigen Legierung besteht, so kann der Anteil des Zinns bis zu 22,5% betragen. Bei höheren Zinnanteilen wird die Bindung der reinen Zinnschicht auf der Lagermetallschicht schlechter.

Wenn bleihaltige Aluminium-Legierungen verwendet werden, so liegt der Anteil des Bleis vorzugsweise bei bis zu 20%. Im Falle von siliziumhaltigen Aluminium-Legierungen ist ein Anteil von bis zu 10% Silizium möglich.

Das erfindungsgemäße Verfahren sieht vor, daß die vorgebildeten, mit einer Lagermetallschicht belegten Gleitelementrohlinge nach Entfetten, Beizen und Reinigen der Oberfläche der Lagermetallschicht mit einem hochalkalischen Aluminium-Immersionsbad, das Zink-, Nickel-, Kupfer- und Eisensalze auf vorwiegend cyanidischer Basis enthält, daß nach der Immersionsbehandlung die Gleitglementrohrlinge mit weitgehend kohlensäurefreiem, deiohisiertem Wasser gespült werden, und daß zumindest in einem ersten Verzinnungsschritt die Badtemperatur zwischen 20 und 26°C, die Stromdichte 1 bis 3 Ampere/dm² und die Expositionsdauer von mindestens 1 min vorgesehen sind.

Um das kohlensäurefreie, deionisierte Wasser herzustellen, wird dieses vor dem Spülvorgang durch eine Austauschanlage mit Harzen geschickt, die geeignet sind, Kohlensäure zu binden. Es hat sich gezeigt, daß kohlensäurehaltiges Wasser zu agressiv ist und die Immersionsabscheidung zerstören kann, was wiederum zu einer vorzeitigen Ablösung der galvanisch aufgebrachten Zinnschicht führt. Hierbei ist es weiterhin vorteilhaft, wenn das Wasser eine Temperatur von 24 - 26°C aufweist.

Der pH-Wert des Immersionsbades liegt bei 12 - 14, vorzugsweise bei 14.

Vorzugsweise erfolgt die Behandlung im Aluminium-Immersionsbad bei Raumtemperatur, worunter mindestens 20°C zu verstehen sind, über eine Dauer von 15 sec bis 60 sec.

Vorzugsweise wird ein Aluminium-Immersionsbad eingesetzt, die 10 bis 20 g/l Zink, 5 bis 10 g/l Nickel, 1 bis 2 g/l Kupfer und geringe Mengen Eisen und zwar in Form von komplex gebundenen Salzen, enthält.

Aufgrund der Immersionsabscheidung können nur bestimmte Elektrolyte für die galvanische Verzinnung eingesetzt werden. Es hat sich herausgestellt, daß beispielsweise ein Fluoroboratbad zu aggressiv ist und die Immersionsschicht zerstört. Wenn eine zinnhaltige Aluminium-Lagerlegierung mit einer galvanischen Zinnschicht versehen werden soll, so weist das Verzinnungsbad vorzugsweise folgende Zusammensetzungen auf:

| | |
|---|---|
| Zinn | 18 bis 22 g/l |
| Schwefelsäure | 180 bis 220 g/l |
| Netzmittel | 8 bis 12 g/l und |
| Kornverfeinerungsmittel | 18 bis 22 g/l, |

wobei reine Zinnanoden vorgesehen sind. Diese Sulfatverzinnung kann auch bei reinen Aluminium-Lagermetallen oder siliziumhaltigen Aluminium-Lagermetallen eingesetzt werden.

Wenn eine bleihaltige Aluminium-Lagerlegierung verzinnt werden soll, so weist das Zinnbad vorzugsweise folgende Zusammensetzungen auf:

| | |
|---|---|
| Zinn | 15 bis 30 g/l |
| Methansulfonsäure | 120 bis 180 g/l |
| Netzmittel | 15 bis 25 g/l und |
| Kornverfeinerungsmittel | 8 bis 12 g/l (aromatische Ketone), |

wobei reine Zinnanoden vorgesehen sind.

Als besonders vorteilhaft hat sich herausgestellt, wenn die Gleitelementrohlinge einer mehrstufigen Vorbehandlung unterzogen werden, wobei sie mehrmals in ein Mischsäurebad aus Schwefelsäure/Chromoxid getaucht werden und nach dem Mischsäurebad mit Kohlesäurefreien wasser gespült werden.

Beispielhafte Ausführungsformen werden nachfolgend anhand der Zeichnungen näher erläutert.

Es zeigen:
- Figur 1: den Schnitt durch ein erfindungsgemäßes Gleitelement und
- Figur 2: ein Balkendiagramm, das Versuche (vgl. Tabelle) verschiedener Gleitlager im Vergleich zeigt.

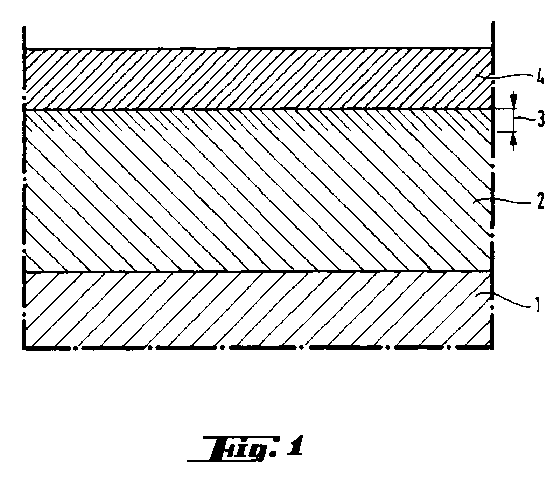

In der Figur 1 ist im Schnitt ein Gleitelement dargestellt. Auf einem Stahlrücken 1 ist eine Lagermetallschicht 2 aus reinem Aluminium, silizium-, blei- oder zinnhaltiger Aluminiumlegierung aufgebracht. Die durch die Immersionsabscheidung bewirkte Oberflächenreaktion ist durch den mit 3 bezeichneten Bereich gekennzeichnet. Da es sich um eine Oberflächenbehandlung handelt, ist diese Immersionsabscheidung keine meßbare Schicht, die auf der Aluminium-Lagerlegierung 2 aufgebracht ist. Es gibt somit auch keine scharfe Grenze zwischen der Immersionsabscheidung 3 und der Lagermetallschicht 2. Auf diese so behandelte Lagermetallschicht 2 ist die reine Zinnschicht 4 als funktionelle Zinnschicht aufgebracht.

Nachfolgend wird an einem Verfahrensbeispiel das Aufbringen einer Zinnschicht auf eine zinnhaltige Aluminium-Lagerlegierung beschrieben.

Zum Einbau der Lagerschalen dienen Doppelaufnahmen. Die Breite der Schlitze beträgt 30 mm bei einem Lagerdurchmesser von bis zu 70 mm. Diese Aufnahme hat an den Seiten keine Lippen und beinhaltet auch keine Räuberkathode. Das Verfahren läuft wie folgt ab:
- Entfettung zweimaliges Entfetten der Teile im Entfettungsautomaten
- Beizen in einer Beizsäure aus Schwefelsäure, Flußsäure, Zinkoxid werden die Lagerschalen 1 min eingetaucht
- Spülen
- Beizen in eine Beizsäure aus Schwefelsäure, Zinkoxid werden die Lagerschalen 22 sec eingetaucht
- Spülen in deionisiertem Wasser 22 sec lang
- Säuretauchen Eintauchen in eine Mischsäure aus Schwefelsäure/Chromoxid 1 min
- Spülen
- Säuretauchen Eintauchen in eine Mischsäure aus Schwefelsäure/Chromoxid 22 sec
- Spülen
- Aluminium-Immersionsflüssigkeit die Doppelaufnahme wird 22 sec in die Aluminium-Immersionsflüssigkeit getaucht. Dünne Oxidschichten werden gelöst und gleichzeitig eine Metallabscheidung aus Nickel, Zinn und Kupfer bewirkt.
- Spülen
- Sulfatverzinnung der Zinnelektrolyt besteht aus 18 bis 22 g/l Zinn, 180 bis 220 g/l Schwefelsäure, 10 g/l Netzmittel und 20 g/l Kornverfeinerer. Die Badtemperatur beträgt 20 bis 26°C. Die Gleitelemente werden bei einer Expositionszeit von 2 min in dem schwefelsauren Zinnbad bei einer Stromdichte von 2 Amp/dm² verzinnt.
- Spülen
- Trocknen.

Alle Spülvorgänge wurden mit temperiertem (24 - 26°C) und kohlensäurefreiem Wasser durchgeführt.

Diese derart hergestellten Gleitlager wurden vor der galvanischen Behandlung geräumt und anschließend auf einem Pleuelprüfstand getestet. Die Versuchsbedingungen sind in der nachfolgenden Tabelle zusammengestellt.

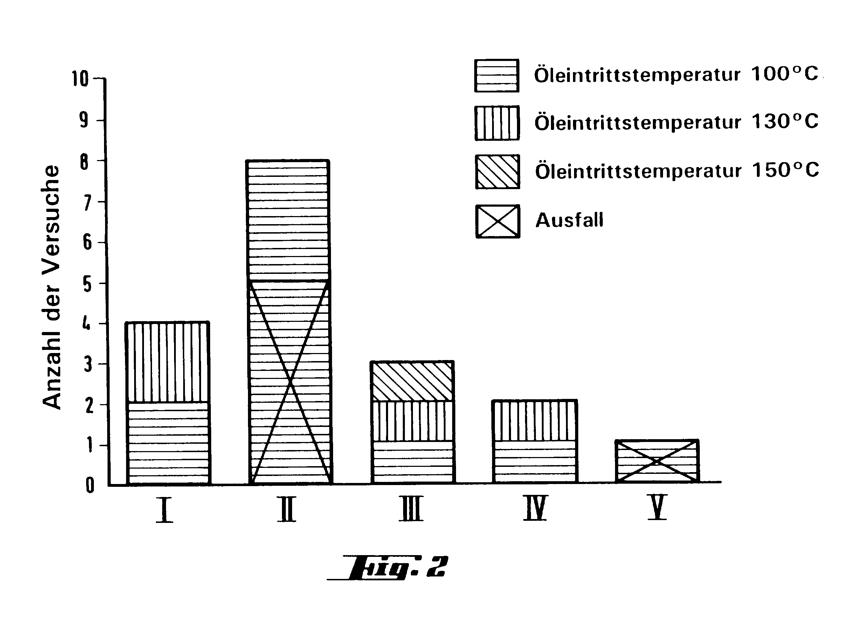

**Tabelle (vgl. Figur 2)**

| Nr. | | Gleitfläch.- bearbeit. | gesamte Versuchszeit | max. Laufzeit eines Versuchs |
|---|---|---|---|---|
| I | galvan.Zinnflash mit Ni-Zwischenschicht | gebohrt | 225 h | 105 h |
| II | galvan. Zinnflash mit Ni-Zwischenschicht | geräumt | 40 h | 15 h |
| III | galvan. Zinnflash gemäß der Erfindung | geräumt | 80 h | 50 h |
| IV | galvan. Zinnflash gemäß der Erfindung | geräumt | 30 h | 50 h |
| V | chem. Zinnflash | geräumt | - | - |

Bei dieser Versuchsreihe hat sich gezeigt, daß die Gleitelemente, die mit einem chemischen Zinnflash versehen wurden, vor Erreichen der Versuchsdrehzahl von 6700/min bereits bei einer Öleintrittstemperatur von 100°C ausgefallen sind. Es konnte lediglich eine Versuchsdrehzahl von 5200/min erreicht werden (Nr. V).

Bei den Gleitlagern mit einem galvanischen Zinnflash und einer Nickelzwischenschicht tragen bei den geräumten Gleitelementen(Nr. II) bereits bei einer Öleintrittstemperatur von 100°C mehr als 50% Ausfälle auf.

Bei den erfindungsgemäßen Gleitlagern wurden sogar bei Öleintrittstemperaturen von 150°C keine Ausfälle beobachtet.

## Patentansprüche

1. Gleitelement mit einer Lagermetallschicht aus Aluminium oder einer Aluminiumlegierung, die Zinn, Blei oder Silizium enthält und die an ihrer der Gleitfläche zugewandten Seite eine galvanisch erzeugte Zinnschicht trägt, die lediglich über eine Immersionsabscheidung auf der Oberfläche der Lagermetallschicht gebunden ist,
dadurch gekennzeichnet, daß
die Zinnschicht (4) über eine sehr dünne, Zink, Kupfer, Nickel und Eisen aufweisende, alkalische, halogenfreie Immersionsabscheidung (3) auf der Lagermetallschicht (2) gebunden ist.

2. Gleitelement nach Anspruch 1, dadurch gekennzeichnet, daß die Lagermetallschicht (2)eine zinnhaltige Aluminiumlegierung mit einem Anteil von bis zu 22,5 % Zinn ist.

3. Gleitelement nach Anspruch 1, dadurch gekennzeichnet, daß die Lagermetallschicht (2) eine bleihaltige Aluminiumlegierung mit einem Anteil von bis zu 20% Blei ist.

4. Gleitelement nach Anspruch 1, dadurch gekennzeichnet, daß die Lagermetallschicht (2) eine siliziumhaltige Aluminiumlegierung mit einem Anteil von bis zu 10% Silizium ist.

5. Gleitelement nach einem der Ansprüche 1 bis 4, dadurch gekennzeichnet, daß die Immersionsabscheidung eine Dicke von <1 µm aufweist.

6. Gleitelement nach Anspruch 5, dadurch gekennzeichnet, daß die Immersionsabscheidung eine Dicke unter 0,3 µm aufweist.

7. Gleitelement nach einem der Ansprüche 1 bis 6, dadurch gekennzeichnet, daß die Zinnschicht (4) als Korrosionsschutzschicht mit einer Dicke zwischen 1 µm und 5 µm ausgebildet ist.

8. Gleitelement nach einem der Ansprüche 1 bis 6, dadurch gekennzeichnet, daß die Zinnschicht (4) als Einlaufschicht mit einer Dicke zwischen 5 µm und 50 µm ausgebildet ist.

9. Verfahren zum Herstellen von Gleitelementen nach einem der Ansprüche 1 bis 8, wobei die vorgebildeten mit einer Lagermetallschicht belegten Gleitelementrohlinge nach Entfetten, Beizen und Reinigen der Oberfläche der Lagermetallschicht der Kombination von aufeinanderfolgender Behandlung in einem Aluminiumimmersionsbad und einer galvanischer Verzinnung unterzogen werden, dadurch gekennzeichnet,
daß ein hochalkalisches Immersionsbad verwendet wird, das Salze von Zink, Nickel, Kupfer und Eisen auf vorwiegend cyanidischer Basis enthält,
daß nach der Immersionsbehandlung die Gleitelementrohrlinge mit weitgehend kohlesäurefreiem, deionisiertem Wasser gespült werden, und daß zumindest in einem ersten Verzinnungsschritt eine Badtemperatur zwischen 20 und 26°C, eine Stromdichte von 1 bis 3A/dm² und Expositionsdauer von mindestens 1 Minute vorgesehen sind.

10. Verfahren nach Anspruch 9, dadurch gekennzeichnet, daß die Behandlung im Aluminiumimmersionsbad bei Raumtemperatur (mindestens 20°C) über eine Dauer zwischen 15 s bis 60 s erfolgt.

11. Verfahren nach einem der Ansprüche 9 oder 10, dadurch gekennzeichnet, daß eine Aluminiumimmersionslösung eingesetzt wird, die enthält:
10 bis 20 g/l Zink
5 bis 10 g/l Nickel
1 bis 2 g/l Kupfer
geringe Mengen Eisen,
wobei die Komponenten in Form von Salzen auf vorwiegend cyanidischer Basis gebunden sind.

12. Verfahren nach einem der Ansprüche 9 bis 11, dadurch gekennzeichnet, daß bei Behandlung einer reinen Aluminiumlagerschicht, einer zinnhaltigen Aluminiumlagerlegierung oder einer siliziumhaltigen Aluminiumlagerlegierung zumindest in einem ersten Verzinnungsschritt die Verzinnung in einem Verzinnungsbad der Zusammensetzung:
Zinn: 18 bis 22 g/l
Schwefelsäure: 180 bis 220 g/l
Netzmittel: 8 bis 12 g/l
Kornverfeinerungsmittel 18 bis 22 g/l
ausgeführt wird, wobei reine Zinn-Anoden vorgesehen sind.

13. Verfahren nach einem der Ansprüche 9 bis 11, dadurch gekennzeichnet, daß bei Behandlung einer bleihaltigen Aluminiumlagerlegierung in einem ersten Verzinnungsschritt die Verzinnung in einem Verzinnungsbad der Zusammensetzung:
Zinn: 15 bis 30 g/l
Methansulfonsäure: 120 bis 180 g/l
Netzmittel: 15 bis 25 g/l
Kornverfeinerungsmittel 8 bis 12 g/l
ausgeführt wird, wobei reine Zinnanoden vorgesehen sind.

14. Verfahren nach einem der Ansprüche 9 bis 13, dadurch gekennzeichnet, daß das Spülwasser eine Temperatur von 24 - 26°C aufweist.

15. Verfahren nach einem der Ansprüche 9 bis 14, dadurch gekennzeichnet, daß die Gleitelementrohlinge einer mehrstufigen Vorbehandlung unterzogen werden, wobei sie mehrmals in einem Mischsäurebad aus Schwefelsäure/Chromoxid getaucht werden.

16. Verfahren nach Anspruch 15, dadurch gekennzeichnet, daß nach dem Eintauchen im Mischsäurebad mit kohlensäurefreiem Wasser gespült wird.

17. Verfahren nach einem der Ansprüche 9 bis 16, dadurch gekennzeichnet, daß der pH-Wert des Immersionsbades bei 12 - 14 liegt.

## Claims

1. Sliding element comprising a bearing metal layer of aluminium or an aluminium alloy containing tin, lead or silicon and which has, on its side facing the sliding surface, an electrodeposited layer of tin which is bonded on the surface of the bearing metal layer only by immersion deposition, characterised in that the tin layer (4) is bonded, by a very thin alkaline, halogen-free immersion deposition (3) comprising zinc, copper, nickel and iron, on the bearing metal layer (2).

2. Sliding element according to claim 1, characterised in that the bearing metal layer (2) is a tin-containing aluminium alloy comprising up to 22.5% of tin.

3. Sliding element according to claim 1, characterised in that the bearing metal layer (2) is a lead-containing aluminium alloy comprising up to 20% of lead.

4. Sliding element according to claim 1, characterised in that the bearing metal layer (2) is a silicon-containing aluminium alloy comprising up to 10% of silicon.

5. Sliding element according to any one of claims 1 to 4, characterised in that the immersion deposition has a thickness < 1 µm.

6. Sliding element according to claim 5, characterised in that the immersion deposition has a thickness below 0.3 µm.

7. Sliding element according to any one of claims 1 to 6, characterised in that the tin layer (4) is formed as a layer protecting against corrosion of a thickness between 1 µm and 5 µm.

8. Sliding layer according to any one of claims 1 to 6, characterised in that the tin layer (4) is formed as a running-in layer of a thickness between 5 µm and 50 µm.

9. Process for the production of sliding elements according to any one of claims 1 to 8 wherein the prefabricated blanks of the sliding elements coated with a bearing metal layer are subjected, after degreasing, pickling and cleaning of the surface of the bearing metal layer, to a combination of subsequent treatment in an aluminium immersion bath and to electrolytic tin plating, characterised in that a highly alkaline immersion bath is used which contains mainly cyanide-based salts of zinc, nickel, copper and iron, that after the immersion treatment the blanks of the sliding elements are rinsed with deionised water which is substantially free of carbon dioxide, and that at least in a first tin plating step a bath temperature between 20 and 26° C, current density of 1 to 3 A/dm² and duration of exposure of at least 1 minute are ensured.

10. Process according to claim 9, characterised in that the treatment in the aluminium immersion bath takes place at room temperature (at least 20° C) for a period of between 15 s to 60 s.

11. Process according to claim 9 or 10, characterised in that an aluminium immersion bath is used which contains:
10 to 20 g/l zinc
5 to 10 g/l nickel
1 to 2 g/l copper
small amount of iron,
the components being bonded mainly in the form of cyanide-based salts.

12. Process according to any one of claims 9 to 11, characterised in that in the treatment of a pure aluminium bearing layer, a tin-containing aluminium bearing alloy or a silicon-containing aluminium bearing alloy the tin-plating is carried out, at least in a first tin-plating step, in a tin-plating bath containing:
tin: 18 to 22 g/l
sulphuric acid: 180 to 220 g/l
wetting agent: 8 to 12 g/l
grain refining agent: 18 to 22 g/l,
anodes of pure tin being used for this process.

13. Process according to any one of claims 9 to 11, characterised in that in the treatment of a lead-containing aluminium bearing alloy the tin-plating is carried out, in a first tin-plating step, in a tin-plating bath containing:
tin: 15 to 30 g/l
methane sulphonic acid: 120 to 180 g/l
wetting agent: 15 to 25 g/l
grain refining agent: 8 to 12 g/l
anodes of pure tin being used for this process.

14. Process according to any one of claims 9 to 13, characterised in that the rinsing water has a temperature of 24 to 26° C.

15. Process according to any one of claims 9 to 14, characterised in that the blanks of the sliding elements are subjected to pre-treatment in several steps in which they are several times immersed in a mixed acid bath of sulphuric acid/chromic acid.

16. Process according to claim 15, characterised in that after immersion in the mixed acid bath rinsing with carbon-dioxide-free water follows.

17. Process according to any one of claims 9 to 16, characterised in that the pH value of the immersion bath is 12 to 14.

## Revendications

1. Elément de glissement comprenant une couche de métal pour paliers en aluminium ou en un alliage d'aluminium contenant de l'étain, du plomb ou du silicium, cette couche portant sur son côté tourné vers la surface de glissement une couche d'étain qui est produite par voie électrolytique et qui n'est liée à la surface de la couche de métal pour paliers que par l'intermédiaire d'un dépôt obtenu par immersion, caractérisé par le fait que la couche d'étain (4) est liée à la couche de métal pour paliers (2) par l'intermédiaire d'un dépôt alcalin très mince (3) qui est obtenu par immersion, qui est exempt d'halogènes et qui contient du zinc, du cuivre, du nickel et du fer.

2. Elément de glissement selon la revendication 1, caractérisé par le fait que la couche de métal pour paliers (2) est constituée par un alliage d'aluminium contenant de l'étain dont la teneur en étain va jusqu'à 22,5%.

3. Elément de glissement selon la revendication 1, caractérisé par le fait que la couche de métal pour paliers (2) est constituée par un alliage d'aluminium contenant du plomb dont la teneur en plomb va jusqu'à 20%.

4. Elément de glissement selon la revendication 1, caractérisé par le fait que la couche de métal pour paliers (2) est constituée par un alliage d'aluminium contenant du silicium dont la teneur en silicium va jusqu'à 10%.

5. Elément de glissement selon l'une des revendications 1 à 4, caractérisé par le fait que le dépôt obtenu par immersion présente une épaisseur inférieure à 1 µm.

6. Elément de glissement selon la revendication 5, caractérisé par le fait que le dépôt obtenu par immersion présente une épaisseur inférieure à 0,3 µm.

7. Elément de glissement selon l'une des revendications 1 à 6, caractérisé par le fait que la couche d'étain (4) est réalisée sous la forme d'une couche de protection contre la corrosion dont l'épaisseur est comprise entre 1 µm et 5 µm.

8. Elément de glissement selon l'une des revendications 1 à 6, caractérisé par le fait que la couche d'étain (4) est réalisée sous la forme d'une couche de mise en service dont l'épaisseur est comprise entre 5 µm et 50 µm.

9. Procédé pour fabriquer des éléments de glissement selon l'une des revendications 1 à 8, dans lequel les ébauches d'éléments de glissement qui sont préalablement mises en forme et qui sont revêtues d'une couche de métal pour paliers sont soumises successivement à la combinaison d'un traitement dans un bain d'immersion en aluminium et d'un étamage électrolytique après un dégraissage, une attaque chimique et un nettoyage de la surface de la couche de métal pour paliers, caractérisé par le fait que l'on utilise un bain d'immersion fortement alcalin qui contient des sels de zinc, de nickel, de cuivre et de fer à base de cyanure d'une manière prépondérante, par le fait qu'après le traitement par immersion, les ébauches d'éléments de glissement sont rincées au moyen d'une eau déminéralisée largement exempte d'acide carbonique, et par le fait qu'il est prévu, du moins dans une première étape d'étamage, une température du bain comprise entre 20 et 26°C, une densité de courant comprise entre 1 et 3 A/dm² et une durée d'exposition d'au moins une minute.

10. Procédé selon la revendication 9, caractérisé par le fait que le traitement dans le bain d'immersion en aluminium a lieu à la température ambiante (au moins 20°C) pendant une durée comprise entre 15 secondes et 60 secondes.

11. Procédé selon l'une des revendications 9 et 10, caractérisé par le fait que l'on utilise une solution d'immersion en aluminium qui contient :
10 à 20 g/l de zinc
5 à 10 g/l de nickel
1 à 2 g/l de cuivre
de faibles quantités de fer,
les constituants étant liés sous la forme de sels qui sont à base de cyanure d'une manière prépondérante.

12. Procédé selon l'une des revendications 9 à 11, caractérisé par le fait que, dans le cas du traitement d'une couche pour paliers en aluminium pur, d'un alliage d'aluminium pour paliers contenant de l'étain ou d'un alliage d'aluminium pour paliers contenant du silicium, l'étamage est réalisé, du moins dans une première étape d'étamage, dans un bain d'étamage qui présente la composition :
Etain 18 à 22 g/l
Acide sulfurique 180 à 220 g/l
Agent mouillant 8 à 12 g/l
Agent d'affinage du grain 18 à 22 g/l,
cependant qu'il est prévu des anodes en étain pur.

13. Procédé selon l'une des revendications 9 à 11, caractérisé par le fait que, dans le cas du traitement d'un alliage d'aluminium pour paliers contenant du plomb, l'étamage est réalisé, dans une première étape d'étamage, dans un bain d'étamage qui présente la composition :
Etain 15 à 30 g/l
Acide méthylsulfonique 120 à 180 g/l
Agent mouillant 15 à 25 g/l
Agent d'affinage du grain 8 à 12 g/l,
cependant qu'il est prévu des anodes en étain pur.

14. Procédé selon l'une des revendications 9 à 13, caractérisé par le fait que l'eau de rinçage présente une température comprise entre 24 et 26°C.

15. Procédé selon l'une des revendications 9 à 14, caractérisé par le fait que les ébauches d'éléments de glissement sont soumises à un traitement préalable en plusieurs étapes en étant plongées plusieurs fois dans un bain d'acide mixte à base d'acide sulfurique et d'oxyde de chrome.

16. Procédé selon la revendication 15, caractérisé par le fait qu'après l'immersion dans le bain d'acide mixte, on rince au moyen d'eau exempte d'acide carbonique.

17. Procédé selon l'une des revendications 9 à 16, caractérisé par le fait que la valeur du pH du bain d'immersion est comprise entre 12 et 14.
